# EUROPÄISCHE PATENTSCHRIFT

(11) **EP 3 943 429 B1**
(45) Veröffentlichungstag und Bekanntmachung des Hinweises auf die Patenterteilung: **27.09.2023**
(21) Anmeldenummer: 21185546.5
(22) Anmeldetag: 14.07.2021
(51) Int. Cl.: B65H 19/18, B29D 30/42, B29D 30/00

(54) **VERFAHREN ZUM AUTOMATISIERTEN WECHSEL EINER MATERIALKASSETTE BEI DER HERSTELLUNG VON FAHRZEUGREIFEN**
METHOD FOR AUTOMATICALLY CHANGING A MATERIAL CASSETTE IN THE MANUFACTURE OF VEHICLE TYRES
PROCÉDÉ DE CHANGEMENT AUTOMATISÉ D'UNE CASSETTE DE MATÉRIAU LORS DE LA FABRICATION DE PNEUMATIQUES DE VÉHICULE

(30) Priorität: 22.07.2020 DE 102020209233
(43) Veröffentlichungstag der Anmeldung: 26.01.2022
(73) Patentinhaber: Continental Reifen Deutschland GmbH, 30165 Hannover (DE)
(72) Erfinder: Winkler, Jens, 30419 Hannover (DE); Wende, Henrik, 30419 Hannover (DE); Benes, Pavel, 30419 Hannover (DE)
(74) Vertreter: Continental Corporation

(56) Entgegenhaltungen:
- EP-A2- 2 695 837
- US-A- 5 049 222

## Beschreibung

Die Erfindung betrifft ein Verfahren zum automatisierten Wechsel einer Materialkassette bei der Herstellung von Fahrzeugreifen.

Es ist bekannt, dass bei der Reifenherstellung Materialkassetten eingesetzt werden, in denen Materiallagen für den Reifenbau aufgewickelt sind.

Die Materialkassetten dienen dazu, die einzelnen Materiallagen, die für den Reifenbauprozess notwendig sind, in einem Speicher für die Reifenbaumaschine bereitzustellen. Wenn ein Rezeptwechsel an der Reifenbaumaschine vorgesehen ist, muss die aktuelle Materialkassette durch eine neue Materialkassette ersetzt werden.

Ein Rezeptwechsel bedeutet, dass z.B. eine neue Materiallage mit einer anderen Gummimischung eingesetzt werden soll.

Das Austauschen der Materialkassette durch eine neue Materialkassette ist mit einem hohen personellen und zeitlichen Aufwand verbunden.

Außerdem muss der Reifenbauprozess an der Baumaschine unterbrochen werden. Die EP 2 695 837 A2 und US 5 049 222 A offenbaren bekannte Verfahren zum automatisierten Wechsel einer Materialkassette beim Herstellen von Fahrzeugreifen.

Der Erfindung liegt die Aufgabe zugrunde, ein Verfahren zu schaffen, mit dem der Herstellungsprozess an einer Reifenbaumaschine verbessert wird.

Insbesondere soll der Prozess beim Auswechseln einer Materialkassette an der Reifenbaumaschine verbessert werden.

Gelöst wird die Aufgabe gemäß einem Verfahren nach Anspruch 1.

Ein Vorteil der Erfindung ist insbesondere darin zu sehen, dass mit dem neuen Verfahren der Herstellungsprozess an Reifenbaumaschinen wesentlich verbessert wird. Mit dem neuen Verfahren kann das Auswechseln einer aktuellen Materialkassette mit einer neuen Materialkassette automatisiert erfolgen.

Es wird dabei sichergestellt, dass das abgetrennte hintere Materialende der ersten Materiallage in der ersten Materialkassette automatisiert mit dem vorderen Materialende der zweiten Materiallage der neuen Materialkassette sicher miteinander mitverbunden werden. Dieses Verbinden der Materialenden würde ansonsten manuell durch einen Bediener erfolgen und dadurch die Zykluszeit an der Reifenbaumaschine stark beeinträchtigen.

Durch das neue Verfahren wird der Materialwechsel an der Reifenbaumaschine automatisiert durchgeführt. Dadurch wird die Zykluszeit bei einem Materialwechsel an einer Reifenbaumaschine wesentlich verkürzt.

In einer vorteilhaften Weiterbildung der Erfindung ist vorgesehen, dass nach Schritt g) mit einem ersten Sensor die Position des vorderen Materialendes der ersten Materiallage auf der Kassettenrolle der ersten Materialkassette kontrolliert wird, wobei bei einem Detektieren des Materialendes der ersten Materiallage das Zurückfördern gestoppt wird, um den Austausch der ersten Materialkassette gegen die zweite Materialkassette einzuleiten.

Dadurch muss ein Bediener nicht mehr kontrollieren, wann das Zurückfördern der Materiallage in die Materialkassette gestoppt werden muss. Dieser Vorgang erfolgt automatisiert.

In einer weiteren vorteilhaften Weiterbildung der Erfindung ist vorgesehen, dass nach Schritt g) der Austausch der ersten Materialkassette gegen die zweite Materialkassette eingeleitet wird, wenn die erste Materiallage mit einer vorgegebenen Anzahl von Umdrehungen in die erste Materialkassette zurückgefördert worden ist.

Dieser Prozess lässt sich einfach automatisieren. Es muss kein Bediener an der Materialkassette bereit stehen, um das Stoppen des Zurückfördern der Materiallage in die Materialkassette einzuleiten.

In einer weiteren vorteilhaften Weiterbildung der Erfindung ist vorgesehen, dass das Durchtrennen der ersten Materiallage mit der Schneidvorrichtung auf einem Schneidbalken in der Fördervorrichtung erfolgt.

Dadurch kann die Materiallage auf dem Schneidbalken mit einer hohen Präzision durchtrennt werden.

Es ist vorgesehen, dass das Greifmittel ein Saugbalken ist, mit dem das hintere Materialende der ersten Materiallage gegriffen und über die Kassettenrolle transportiert wird.

Der Saugbalken saugt das hintere Materialende mit einer Saugkraft an und stellt dadurch sicher, dass das Materialende sich nicht vom Greifmittel ablösen kann.

Es ist vorgesehen, dass das Verbinden der beiden Materialenden mit dem Saugbalken auf der Kassettenrolle erfolgt.

Dadurch können die beiden Materialenden mit einem hohen Anpressdruck miteinander verbunden werden.

In einer weiteren vorteilhaften Weiterbildung der Erfindung ist vorgesehen, dass die Fördervorrichtung zwei Rollen mit autonomen Antrieben umfasst.

Mit den beiden Rollen kann die Materiallage mit einer hohen Präzision auf der Ablage positioniert werden.

In einer weiteren vorteilhaften Weiterbildung der Erfindung ist vorgesehen, dass der erste Sensor ein optisches Kamerasystem mit einer digitalen Bildverarbeitung umfasst.

Mit einem optischen Kamerasystem lässt sich das hintere Materialende einer Materiallage einfach in seiner Position überwachen.

In einer weiteren vorteilhaften Weiterbildung der Erfindung ist vorgesehen, dass der erste Sensor ein Laserabtastsystem oder ein Lichtschnittverfahren umfasst.

Ein Laserabtastsystem oder ein Lichtschnittverfahren stellen ebenfalls geeignete Sensoren dar, weil sie eine schnelle Reaktionszeit besitzen, um das Materialende zu detektieren.

Anhand eines Ausführungsbeispiels soll die Erfindung näher erläutert werden. Es zeigen:
- Fig. 1:: ein Ausführungsbeispiel für das Verfahren
- Fig. 2 bis Fig. 10:: einzelne Verfahrensschritte des Verfahrens.

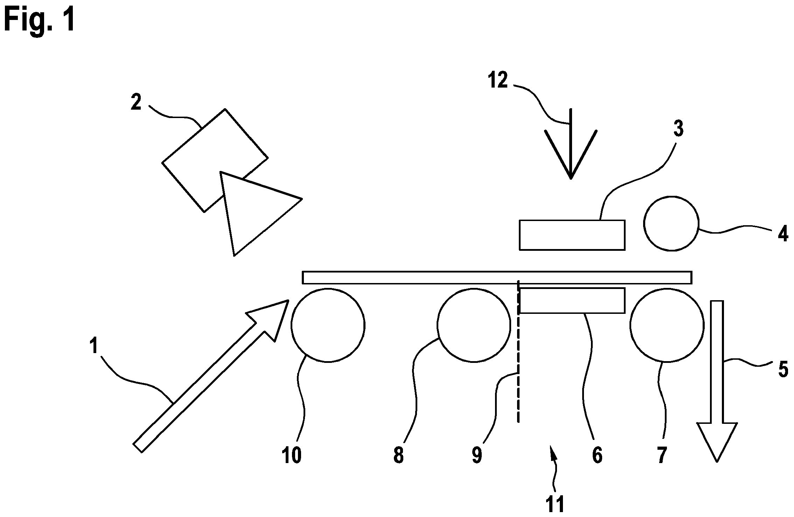

Die Figur 1 zeigt ein Ausführungsbeispiel für das Verfahren in einer Seitenansicht. Die Materiallage 1 ist in einer Materialkassette aufgewickelt. Von der Materialkassette ist lediglich die Kassettenrolle 10 dargestellt. Bei der Materiallage 1 kann es sich beispielsweise um Innenschichtmaterial oder Karkasslagenmaterial für einen Fahrzeugreifen handeln. Die Materiallage 1 wird über die Kassettenrolle 10 der Fördervorrichtung 11 zugeführt. Die Fördervorrichtung 11 umfasst insbesondere zwei autonom angetriebene Rollen 7 und 8, eine Ablage bzw. einen Schneidbalken 6 und eine Bremsrolle 4. Die Materiallage 1 wird durch die Fördervorrichtung 11 gefördert und über eine Speicherschleife einer Reifenbaumaschine zugeführt. Von der Speicherschleife ist schematisch ein oberer Teil 5 dargestellt. Oberhalb der Ablage 6 der Fördervorrichtung ist ein Saugbalken 3 und eine verfahrbare Schneidvorrichtung 12 angeordnet. Oberhalb der Kassettenrolle 10 ist ein erster Sensor 2 angeordnet, der dazu dient, das Materialende der Materiallage 1 zu überwachen. Zwischen der Rolle 8 und der Ablage 6 ist ein zweiter Sensor 9 angeordnet.

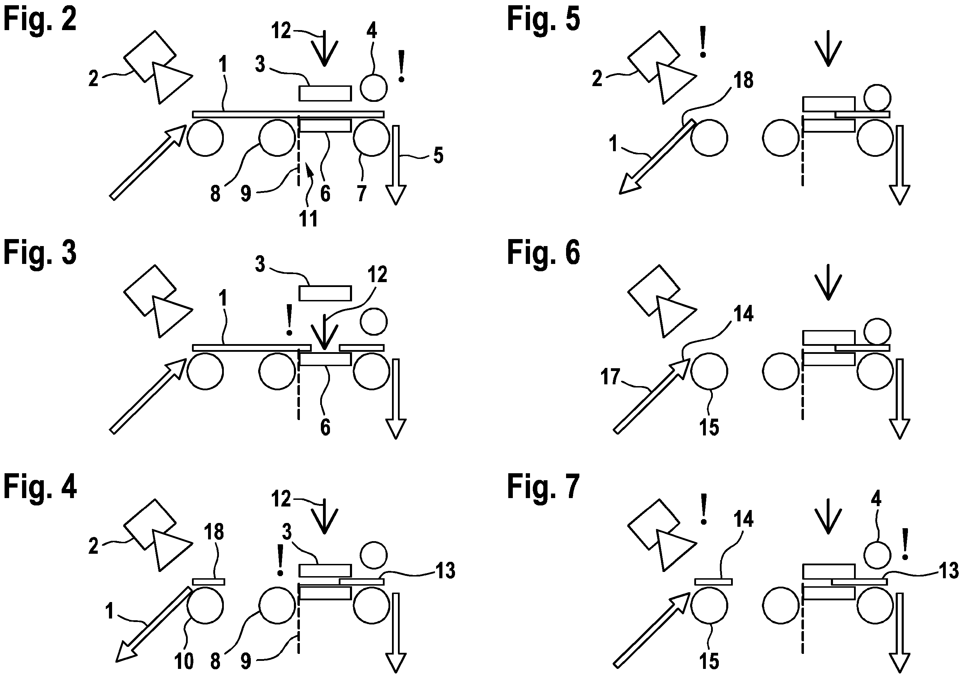

Die Figur 2 zeigt den Verfahrensschritt, bei dem die Bremsrolle 4 heruntergefahren wird und die Materiallage 1 mit der unteren Rolle 7 der Fördervorrichtung 11 einklemmt.

Mit dem Einklemmen der Materiallage 1 wird verhindert, dass der Teil 5 der Speicherschleife aufgrund von Schwerkrafteinflüssen hinunterfällt.

Die Figur 3 zeigt den Verfahrensschritt, bei dem Saugbalken 3 noch oben oder zur Seite gefahren wird, damit die Schneidevorrichtung 12 über den Schneidbalken 6 verfahren werden kann.

Anschließend wird mit der Schneidevorrichtung 12 die Materiallage 1 auf dem Schneidbalken 6 durchtrennt.

Die Figur 4 zeigt den Verfahrensschritt, bei dem die erste Materiallage 1 in die erste Materialkassette zurückgefördert wird. Der Sensor 2 überwacht diesen Vorgang und stoppt oder verzögert das Zurückfördern, sobald er das Materialende 18 an der Kassettenrolle 10 detektiert hat.

Der zweite Sensor 9 im Bereich der Rolle 8 der Fördervorrichtung kontrolliert ebenfalls das Zurückfördern des Materialendes 18 der Materiallage 1. Nachdem das Materialende 18 den Sensor 9 passiert hat, wird der Saugbalken 3 herabgefahren, der anschließend das Materialende 13 der ersten Materiallage greift.

Die Figur 5 zeigt den Verfahrensschritt, bei dem die Materiallage in die erste Materialkassette zurückgefördert worden ist.

Die Figur 6 zeigt den Verfahrensschritt, bei dem die leere Materialkassette durch eine neue zweite Materialkassette mit neuem Material, z.B. mit einer neuen Gummimischung, ersetzt worden ist. Über die Kassettenrolle 15 der zweiten Kassette wird das vordere Materialende 14 der Materiallage zur Fördervorrichtung transportiert. Der erste Sensor 2 überwacht diesen Prozess, bei dem die neue Materiallage nach einem bestimmten Zeitabschnitt die Oberseite der Kassettenrolle 15 erreicht hat.

Die Figur 7 zeigt den Verfahrensschritt, bei dem das vordere Materialende 14 die Oberseite der Kassettenrolle 15 erreicht hat. Der erste Sensor 2 erkennt das vordere Materialende 14 und stoppt anschließend den Antrieb für die Kassettenrolle 15. Anschließend wird die Bremsrolle 4 nach oben gefahren.

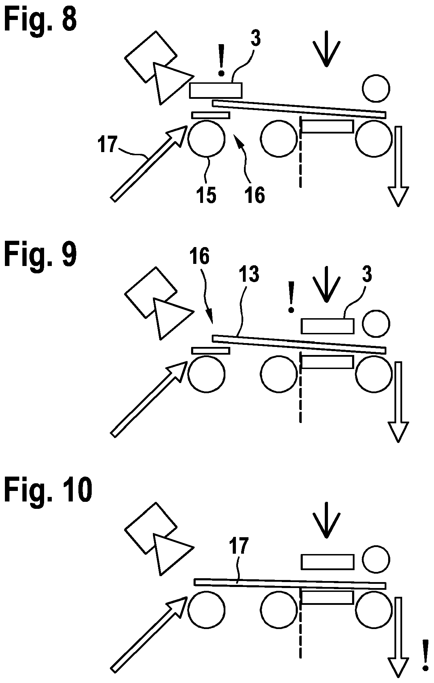

Die Figur 8 zeigt den Verfahrensschritt, bei dem der Saugbalken 3 das hintere Materialende der ersten Materiallage gegriffen und über die Kassettenrolle der zweiten Kassette transportiert hat. Anschließend erfolgt das Verbinden des vorderen Materialendes mit dem hinteren Materialende 13. Beide Materialenden werden fest mit dem Saugbalken 3 zusammengedrückt und dadurch ein Überlappungsspleiß erreicht.

Die Figur 9 zeigt den Verfahrensschritt, bei dem der Saugbalken in seine Ausgangsposition zurückgefahren wird.

Die Figur 10 zeigt den Verfahrensschritt, bei dem die zweite Materiallage 17 durch die Fördervorrichtung zur Reifenbaumaschine weiter transportiert wird. Der Überlappungsspleiß wird im vorderen Bereich der Reifenbaumaschine entweder manuell oder automatisiert entnommen. Der Wechsel der leeren Materialkassette gegen eine neue zweite Materialkassette mit einer neuen Materiallage kann ebenfalls automatisiert erfolgen. Der automatisierte Wechsel der Materialkassette kann beispielsweise durch ein fahrerloses Transportsystem oder durch einen automatisierten Kran erfolgen. Außerdem kann die Vorrichtung mit einem automatisierten Erkennungssystem ausgerüstet werden, mit der ein Wechsel der Materialkassette automatisch erkannt wird. Die Materialkassette könnte z.B. mit einem Transpondersystem ausgerüstet sein, um automatisch zu erkennen, ob die richtige Materialkassette mit dem benötigten Reifenbaumaterial eingesetzt worden ist.

### Bezugszeichenliste

### (ist Teil der Beschreibung)

- 1: Erste Materiallage (z.B. Innerliner)
- 2: Erster Sensor
- 3: Saugbalken
- 4: Bremsrolle
- 5: Erste Materiallage als Teil der Speicherschleife
- 6: Ablage der Fördervorrichtung (insb. Schneidbalken)
- 7: Vordere Rolle der Fördervorrichtung
- 8: Hintere Rolle der Fördervorrichtung
- 9: Zweiter Sensor
- 10: Kassettenrolle der ersten Kassette
- 11: Fördervorrichtung
- 12: Schneidvorrichtung (insb. Messersystem)
- 13: Hinteres Materialende der ersten Materiallage
- 14: Vorderes Materialende der zweiten Materiallage
- 15: Kassettenrolle der zweiten Kassette
- 16: Überlappungssplice
- 17: Zweite Materiallage
- 18: Materialende der ersten Materiallage

## Patentansprüche

1. Verfahren zum automatisierten Wechsel einer Materialkassette bei der Herstellung von Fahrzeugreifen,
mit folgenden Schritten:
a) Bereitstellen einer ersten Materialkassette mit einer aufgewickelten ersten Materiallage (1),
b) Fördern der ersten Materiallage (1) mit einer Kassettenrolle (10) aus der Materialkassette zu einer Speicherschleife (5) einer Reifenbaumaschine,
c) Einsetzen einer Stopp-Vorrichtung (4) zum Halten der Materiallage (1) in einer Fördervorrichtung (11),
f) Einsetzen einer Schneidvorrichtung (12), wobei mit der Schneidvorrichtung (12) die erste Materiallage (1) in der Fördervorrichtung (11) durchtrennt wird,
g) Zurückfördern der ersten Materiallage (1) in die erste Materialkassette,
h) Austauschen der ersten Materialkassette mit einer zweiten Materialkassette mit einer neuen zweiten Materiallage (17),
i) Fördern des vorderen Materialendes (14) der zweiten Materiallage (17) auf die Kassettenrolle (15) der zweiten Materialkassette,
j) Greifen des hinteren Materialendes (13) der ersten Materiallage (1) mit einem Greifmittel (3),
k) Verbinden des hinteren Materialendes (13) der ersten Materiallage (1) mit dem vorderen Materialende (14) der neuen zweiten Materiallage (17),
wobei beide Materialenden (13, 14) mit einem Überlappungssplice (16) verbunden werden,
wobei das Greifmittel (3) ein Saugbalken ist, mit dem das hintere Materialende (13) der ersten Materiallage (1) gegriffen und über die Kassettenrolle (15) transportiert wird,
wobei das Verbinden der beiden Materialenden (13, 14) mit dem Saugbalken (3) auf der Kassettenrolle (15) erfolgt,
l) Weiterfördern der verbundenen ersten und zweiten Materiallage (1, 17) zur Speicherschleife der Reifenbaumaschine.

2. Verfahren nach Anspruch 1,
**dadurch gekennzeichnet, dass**
nach Schritt g) mit einem ersten Sensor (2) die Position des vorderen Materialendes (18) der ersten Materiallage (1) auf der Kassettenrolle (10) der ersten Materialkassette kontrolliert wird,
wobei bei einem Detektieren des Materialendes (1) der ersten Materiallage das Zurückfördern gestoppt wird, um den Austausch der ersten Materialkassette gegen die zweite Materialkassette einzuleiten.

3. Verfahren nach einem der vorhergehenden Ansprüche,
**dadurch gekennzeichnet, dass**
nach Schritt g) der Austausch der ersten Materialkassette gegen die zweite Materialkassette eingeleitet wird, wenn die erste Materiallage (1) mit einer vvorgegebenen Anzahl von Umdrehungen in die erste Materialkassette zurückgefördert worden ist.

4. Verfahren nach einem der vorhergehenden Ansprüche,
**dadurch gekennzeichnet, dass**
das Durchtrennen der ersten Materiallage (1) mit der Schneidvorrichtung (12) auf einem Schneidbalken (6) in der Fördervorrichtung (11) erfolgt.

5. Verfahren nach einem der vorhergehenden Ansprüche,
**dadurch gekennzeichnet, dass**
die Fördervorrichtung (11) zwei Rollen (7, 8) mit autonomen Antrieben umfasst.

6. Verfahren nach einem der vorhergehenden Ansprüche,
**dadurch gekennzeichnet, dass**
der erste Sensor (2) ein optisches Kamerasystem mit einer digitalen Bildverarbeitung umfasst.

7. Verfahren nach einem der vorhergehenden Ansprüche,
**dadurch gekennzeichnet, dass**
der erste Sensor (2) ein Laserabtastsystem oder ein Lichtschnittverfahren umfasst.

8. Verfahren nach einem der vorhergehenden Ansprüche,
**dadurch gekennzeichnet, dass**
das Materialende der ersten Materiallage (13) nicht durch einen Schnitt mit der Schneidvorrichtung (12) erzeugt wurde sondern das Materialende der in der Materialkassette eingewickelten Materiallage beschreibt.

## Claims

1. Method for automatically changing a material cassette in the manufacture of vehicle tyres,
comprising the following steps:
a) providing a first material cassette having a wound-up first material ply (1),
b) feeding the first material ply (1) by a cassette roller (10) out of the material cassette to a storage loop (5) of a tyre building machine,
c) using a stopping device (4) for stopping the material ply (1) in a feeding device (11),
f) using a cutting device (12), the first material ply (1) being cut through in the feeding device (11) by the cutting device (12),
g) feeding the first material ply (1) back into the first material cassette,
h) exchanging the first material cassette for a second material cassette having a new, second material ply (17),
i) feeding the front material end (14) of the second material ply (17) onto the cassette roller (15) of the second material cassette,
j) gripping the rear material end (13) of the first material ply (1) by a gripping means (3),
k) joining the rear material end (13) of the first material ply (1) to the front material end (14) of the new, second material ply (17),
the two material ends (13, 14) being joined by an overlapping splice (16),
the gripping means (3) being a suction bar, by which the rear material end (13) of the first material ply (1) is gripped and transported over the cassette roller (15),
the joining of the two material ends (13, 14) taking place by the suction bar (3) on the cassette roller (15),
l) feeding the joined first and second material plies (1, 17) further to the storage loop of the tyre building machine.

2. Method according to Claim 1,
**characterized in that**
after step g), the position of the front material end (18) of the first material ply (1) on the cassette roller (10) of the first material cassette is checked by a first sensor (2),
the feeding back being stopped in order to initiate the exchange of the first material cassette for the second material cassette when the material end (1) of the first material ply is detected.

3. Method according to one of the preceding claims,
**characterized in that**
after step g), the exchange of the first material cassette for the second material cassette is initiated when the first material ply (1) has been fed back into the first material cassette by a predetermined number of revolutions.

4. Method according to one of the preceding claims,
**characterized in that**
the cutting through of the first material ply (1) by the cutting device (12) takes place on a cutting bar (6) in the feeding device (11).

5. Method according to one of the preceding claims,
**characterized in that**
the feeding device (11) comprises two rollers (7, 8) with autonomous drives.

6. Method according to one of the preceding claims,
**characterized in that**
the first sensor (2) comprises an optical camera system with digital image processing.

7. Method according to one of the preceding claims,
**characterized in that**
the first sensor (2) comprises a laser scanning system or a light-section method.

8. Method according to one of the preceding claims,
**characterized in that**
the material end of the first material ply (13) was not created by a cut by the cutting device (12) but instead describes the material end of the material ply wound-in in the material cassette.

## Revendications

1. Procédé de changement automatisé d'une cassette de matériau lors de la fabrication de pneus de véhicule,
avec les étapes suivantes :
a) la fourniture d'une première cassette de matériau avec une première couche de matériau (1) enroulée,
b) l'acheminement de la première couche de matériau (1) avec un rouleau de cassette (10) de la cassette de matériau vers une boucle de stockage (5) d'une machine de fabrication de pneus,
c) l'insertion d'un dispositif d'arrêt (4) pour maintenir la couche de matériau (1) dans un dispositif d'acheminement (11),
f) l'insertion d'un dispositif de coupe (12), la première couche de matériau (1) étant coupée avec le dispositif de coupe (12) dans le dispositif d'acheminement (11),
g) la réintroduction de la première couche de matériau (1) dans la première cassette de matériau,
h) le remplacement de la première cassette de matériau par une deuxième cassette de matériau avec une nouvelle deuxième couche de matériau (17),
i) l'acheminement de l'extrémité de matériau avant (14) de la deuxième couche de matériau (17) sur le rouleau de cassette (15) de la deuxième cassette de matériau,
j) la saisie de l'extrémité de matériau arrière (13) de la première couche de matériau (1) avec un moyen de préhension (3),
k) la liaison de l'extrémité de matériau arrière (13) de la première couche de matériau (1) avec l'extrémité de matériau avant (14) de la nouvelle deuxième couche de matériau (17),
les deux extrémités de matériau (13, 14) étant reliées par une épissure de chevauchement (16),
le moyen de préhension (3) étant une barre d'aspiration avec laquelle l'extrémité de matériau arrière (13) de la première couche de matériau (1) est saisie et transportée sur le rouleau de cassette (15),
la liaison des deux extrémités de matériau (13, 14) avec la barre d'aspiration (3) s'effectuant sur le rouleau de cassette (15),
l) le transfert des première et deuxième couches de matériau (1, 17) reliées vers la boucle de stockage de la machine de fabrication de pneus.

2. Procédé selon la revendication 1, **caractérisé en ce qu'**après l'étape g), la position de l'extrémité de matériau avant (18) de la première couche de matériau (1) sur le rouleau de cassette (10) de la première cassette de matériau est contrôlée avec un premier capteur (2),
en cas de détection de l'extrémité de matériau (1) de la première couche de matériau, la réintroduction étant arrêtée afin de déclencher le remplacement de la première cassette de matériau par la deuxième cassette de matériau.

3. Procédé selon l'une quelconque des revendications précédentes, **caractérisé en ce qu'**après l'étape g), le remplacement de la première cassette de matériau par la deuxième cassette de matériau est déclenché lorsque la première couche de matériau (1) a été réintroduite dans la première cassette de matériau avec un nombre de tours prédéterminé.

4. Procédé selon l'une quelconque des revendications précédentes, **caractérisé en ce que** la coupe de la première couche de matériau (1) est effectuée avec le dispositif de coupe (12) sur une barre de coupe (6) dans le dispositif d'acheminement (11).

5. Procédé selon l'une quelconque des revendications précédentes, **caractérisé en ce que** le dispositif d'acheminement (11) comprend deux rouleaux (7, 8) avec des entraînements autonomes.

6. Procédé selon l'une quelconque des revendications précédentes, **caractérisé en ce que** le premier capteur (2) comprend un système de caméra optique avec un traitement d'image numérique.

7. Procédé selon l'une quelconque des revendications précédentes, **caractérisé en ce que** le premier capteur (2) comprend un système de balayage laser ou un système de coupe de lumière.

8. Procédé selon l'une quelconque des revendications précédentes, **caractérisé en ce que** l'extrémité de matériau de la première couche de matériau (13) n'a pas été produite par une coupe avec le dispositif de coupe (12), mais décrit l'extrémité de matériau de la couche de matériau enroulée dans la cassette de matériau.
